# EUROPÄISCHE PATENTSCHRIFT

(11) **EP 3 786 013 B1**
(45) Veröffentlichungstag und Bekanntmachung des Hinweises auf die Patenterteilung: **27.07.2022**
(21) Anmeldenummer: 19193898.4
(22) Anmeldetag: 27.08.2019
(51) Int. Cl.: B60T 8/18

(54) **LASTABHÄNGIGES BREMSDRUCKVENTIL**
LOAD-DEPENDENT BRAKE PRESSURE VALVE
SOUPAPE DE PRESSION DE FREINAGE DÉPENDANT DE LA CHARGE

(43) Veröffentlichungstag der Anmeldung: 03.03.2021
(73) Patentinhaber: Haldex Brake Products Aktiebolag, 261 24 Landskrona (SE)
(72) Erfinder: Heer, Siegfried, 69168 Wiesloch (DE)
(74) Vertreter: REHBERG HÜPPE + PARTNER

(56) Entgegenhaltungen:
- EP-A1- 0 221 031
- EP-A1- 3 450 269
- DE-A1- 1 580 119
- US-A- 3 586 389

## Beschreibung

### TECHNISCHES GEBIET DER ERFINDUNG

Die Erfindung betrifft ein lastabhängiges Bremsdruckventil, welches insbesondere Einsatz findet in einem Fahrzeuganhänger, bei welchem eine Achse nicht (oder nicht wesentlich) gegenüber einem Chassis des Fahrzeuganhängers gefedert ist.

### STAND DER TECHNIK

Lastabhängige Bremsdruckventile, die auch als automatisch lastabhängige Bremskraftregler oder ALB-Ventile bezeichnet werden, dienen dazu, einen von einen Bremssteuerdruck entsprechend der Beladung des Fahrzeugs anzupassen, wobei diese Anpassung insbesondere derart erfolgt, dass für denselben Bremssteuerdruck für unterschiedliche Beladungen des Fahrzeugs dieselbe Bremsverzögerung herbeigeführt wird, was mit Erhöhung der Beladung einen größeren Bremsdruck erfordert. Beispielsweise aus
- den Druckschriften DE-OS 1 966 569 und DE 30 06 800 C2,
- aus den Produkten mit den Produktkennzeichnungen G771 und G839 der Haldex Brake Products GmbH oder
- aus entsprechenden Produkten der Wettbewerber der Haldex Brake Products GmbH (wie bspw. ein automatisch lastabhängiger Bremskraftregler des Unternehmens Wabco GmbH mit der Kennzeichnung "ALB 47571..." oder des Unternehmens Knorr-Bremse Systeme für Nutzfahrzeuge GmbH mit der Kennzeichnung "BR43...")
bekannte lastabhängige Bremsdruckventile basieren auf dem Grundkonzept, dass in dem Bremsdruckventil ein Eingangs-Bremsdruck an einem Eingangsanschluss, der dem Bremssteuerdruck entspricht, über eine Umwandlungscharakteristik des Bremsdruckventils umgewandelt wird in einen Ausgangs-Bremsdruck an einem Ausgangsanschluss des Bremsdruckventils, wobei der Ausgangs-Bremsdruck dann als Bremsdruck den Bremszylindern des Fahrzeuganhängers zugeführt wird. Hierbei gibt die Umwandlungscharakteristik die Abhängigkeit zwischen dem Eingangs-Bremsdruck und dem Ausgangs-Bremsdruck. Die erforderliche Lastabhängigkeit der Umwandlungscharakteristik wird dadurch gewährleistet, dass das Ventilgehäuse des Bremsdruckventils an dem Chassis befestigt wird, während ein Verstellhebel in einem Endbereich an einer gefederten Achse verschwenkbar angelenkt ist, während der andere Endbereich des Verstellhebels drehfest mit einer Verstellwelle verbunden ist. Die Verstellwelle erstreckt sich durch das Ventilgehäuse in das Innere des Ventilgehäuses und ist drehbar in dem Ventilgehäuse gelagert. Eine Veränderung der Einfederung der Achse in Folge einer Veränderung der Beladung des Fahrzeugs führt zu einer Verschwenkung des Verstellhebels und damit zu einer Verdrehung der Verstellwelle. Die Verstellwelle wirkt mit den Ventilelementen des Bremsdruckventils derart zusammen, dass je nach Drehwinkel der Verstellwelle eine andere Umwandlungscharakteristik zur Wirkung kommt.

Gemäß DE 30 06 800 C2 verfügt ein Bremsdruckventil über einen (hier zweiteiligen) Bremskolben, der über den Eingangsanschluss mit dem Bremssteuerdruck beaufschlagt ist. Die an dem Bremskolben erzeugte Bremssteuerkraft wird über eine mit dem Bremskolben gekoppelte Koppelstange übertragen an eine mechanische Umwandlungseinrichtung, die in DE 30 06 800 als Hebelübersetzungseinrichtung ausgebildet ist, und über die Hebelübersetzungseinrichtung übertragen an ein kombiniertes Einlass-Auslassventils. Das Einlass-Auslassventil ist zwischen einen Bremszylinder, einen Druckluftbehälter und eine Endlüftung zwischengeordnet. Ohne an dem Bremskolben anliegenden Bremssteuerdruck befindet sich das Einlass-Auslassventil in seiner Entlüftungsstellung, in welcher der Bremszylinder mit der Entlüftung verbunden ist. Mit ansteigendem Bremssteuerdruck und damit ansteigender Bremssteuerkraft wird das Einlass-Auslassventil über eine Sperrstellung in die Belüftungsstellung überführt, in welcher das Einlass-Auslassventil den Vorratsbehälter mit dem Bremszylinder verbindet. Der an dem Ausgangsanschluss ausgesteuerte Bremsdruck beaufschlagt einen Wiegekolben, der auf das Einlass-Auslassventil eine Kraft in Richtung der Sperrstellung oder Entlüftungsstellung ausübt, die von der Größe des ausgesteuerten Bremsdrucks abhängig ist. Erreicht der ausgesteuerte Bremsdruck den durch die Umwandlungscharakteristik entsprechend den wirkenden Ventilquerschnitten vorgegebenen, von dem Bremssteuerdruck abhängigen Solldruck, nimmt das Einlass-Auslassventil seine Sperrstellung ein, die auch als Abschlussstellung bezeichnet werden kann. Eine Lastanhängigkeit ist bei diesem Bremsdruckventil dadurch gewährleistet, das auf den Wiegekolben nicht lediglich die Kraft in Folge des ausgesteuerten Bremsdrucks wirkt. Vielmehr wirkt auf den Wiegekolben zusätzlich eine Federkraft, wobei zwischen den Wiegekolben und die die Federkraft erzeugende Feder die Hebelübersetzungseinrichtung zwischengeschaltet ist. In dieser Hebelübersetzungseinrichtung wird die die Federkraft erzeugende Feder je nach Drehwinkel der Verstellwelle mit einem anderen Hebelarm von dem Wiegekolben beaufschlagt, was zu der angestrebten lastabhängigen Veränderung der Umwandlungscharakteristik führt. Gemäß DE 30 06 800 C2 ist der Wiegekolben über einen Anschlag an einem Druckstück abgestützt, welches wiederum an einem verschwenkbaren Hebel der Hebelübersetzungseinrichtung abgestützt ist. Der verschwenkbare Hebel ist über eine Rolle an einem weiteren verschwenkbaren Hebel abgestützt. An dem weiteren Hebel ist verschwenkbar die Koppelstange angelenkt und der weitere verschwenkbare Hebel ist über die Feder an dem Gehäuse des Bremsdruckventils abgestützt. Die lastabhängig verdrehte Verstellwelle ist über eine Schwinge an eine Führungseinrichtung für die Rolle derart angelenkt, dass mit einer Verdrehung der Verstellwelle die Hebelarme der Kontaktfläche der Rolle mit dem Hebel und dem weiteren Hebel verändert werden können, was die lastabhängige Veränderung der Umwandlungscharakteristik zur Folge hat. Das Bremsdruckventil gemäß DE 30 06 800 C2 beinhaltet einen zusätzlichen Notbremskolben zwecks Gewährleistung einer Notbremsfunktion, welche bei einem Einbruch einer Druckluftversorgung, beispielsweise bei einem Abriss oder einer Leckage einer Versorgungsleitung oder eines Kupplungskopfes zwischen dem Zugfahrzeug und dem Anhänger, zu einer automatischen Notbremsung des Anhängers führt.

Andere Umwandlungseinrichtungen, die die lastabhängige Beeinflussung der Umwandlungscharakteristik des lastabhängigen Bremsdruckventils in Abhängigkeit von einer Verdrehung einer Verstellwelle gewährleisten, sind ebenfalls aus dem Stand der Technik bekannt. So basiert der aus DE-OS 1 966 569 bekannte Umwandlungsmechanismus darauf, dass eine an dem Bremskolben abgestützte Koppelstange in dem dem Bremskolben abgewandten Endbereich eine Rolle trägt, deren Bewegung in Bewegungsrichtung des Bremskolbens über eine Schrägfläche umgewandelt wird in eine vertikal zu dieser Bewegungsrichtung orientierte Bewegung einer Federaufnahme. An der Federaufnahme ist eine Feder abgestützt, die wiederum an einem Wiegekolben abgestützt ist, der mit dem ausgesteuerten Bremsdruck beaufschlagt ist. Über die mit der Einfederung der Achse verdrehte Verstellwelle wird in diesem Fall der Neigungswinkel der Schrägfläche verändert.

Lastabhängige Bremsdruckventile der oben beschriebenen Art können nicht eingesetzt werden für Fahrzeuganhänger, deren Achsen nicht gefedert sind, da hier die Anlenkung des Verstellhebels an die Achse nicht zu der lastabhängigen Verdrehung des Verstellhebels und damit der Verdrehung der Verstellwelle führt. EP 3 450 269 A1 schlägt daher vor, bei einem Fahrzeuganhänger mit nicht gefederten Achsen den Verstellhebel des Bremsdruckventils nicht an der Fahrzeugachse zu befestigen, sondern vielmehr an einer Konsole, die an dem Chassis des Fahrzeuganhängers befestigt ist. Die Konsole verfügt dabei über eine kreisringsegmentförmige Kulisse mit mehreren über den Umfang des Kreisringsegments verteilten Arretier-Ausnehmungen. Der Verstellhebel trägt in seinem Endbereich einen Arretierstift. Über die manuelle Betätigung eines Betätigungshebels kann der Arretierstift unter Beaufschlagung einer Feder in seine Längsrichtung und vertikal zur Schwenkebene des Verstellhebels aus einer verriegelnden Stellung in eine nicht verriegelnde Stellung bewegt werden. In der nicht verriegelnden Stellung kann der Verrieglungsstift entlang der Kulisse bewegt werden, womit eine Verschwenkung des Verstellhebels und der Verstellwelle erfolgt. Hingegen verriegelt der Arretierstift mit einem Verrieglungsabschnitt desselben in der verriegelten Stellung mit einer der Verrieglungs-Ausnehmungen. Der Benutzer kann somit durch Auswahl der Verrieglung des Verrieglungsstifts in einer der Verrieglungs-Ausnehmungen einen Drehwinkel der Verstellwelle vorgeben, womit durch den Benutzer eine gezielte Auswahl der Umwandlungscharakteristik des Bremsdruckventils je nach Beladungszustand erfolgen kann. Hierbei kann die Beladung auch korrelieren mit einer Ausstattung oder einen Typ des Fahrzeuganhängers, Anpassungen des Fahrzeuganhängers an Wünsche des Kunden und einen spezifischen Einsatzzweck, Aufbauten des Fahrzeuganhängers u. ä.

EP 0 221 031 A1 offenbart ein herkömmliches Bremsdruckventil, dessen Ventilgehäuse an einem Chassis befestigt ist. Aus dem Ventilgehäuse erstreckt sich eine Verstellwelle hinaus, die drehfest mit einem Verstellhebel verbunden ist. An den Verstellhebel ist ein Ende eines Betätigungshebels angelenkt, dessen anderes Ende an einer gefederten Achse angelenkt ist. Eine Einfederung der Achse führt zu einer Verdrehung der Verstellwelle, die eine Anpassung der Umwandlungscharakteristik des lastabhängigen Bremsdruckventils zur Folge hat. Ventilelemente des Bremsdruckventils gewährleisten eine Umwandlungscharakteristik des Bremsdruckventils, bei welcher eine Beaufschlagung eines Eingangs des Bremsdruckventils mit einem Bremsanforderungsdruck in einer ersten zeitlichen Phase nicht zu der Bewegung eines den Druck für die Bremse beeinflussenden Kolbens führt und eine anschließende zweite Phase, in welcher der den Druck für die Bremse beeinflussende Kolben in Bewegung versetzt wird. Die Kraftverhältnisse an dem Kolben können zwecks Gewährleistung einer Lastabhängigkeit beeinflusst werden über einen Kipphebel, der eine Betätigungsfläche aufweist, an welcher eine Rolle abwälzt, die an einem an der Verstellwelle befestigten Betätigungshebel gelagert ist. Hier verändert sich in Abhängigkeit der Verdrehung der Verstellwelle (und damit der Einfederung der Achse) der Hebelarm der Kontaktfläche der Rolle mit dem Kipphebel. Das lastabhängige Bremsdruckventil gemäß EP 0 221 031 A1 vermeidet in einer Notbremssituation, bei der eine Bremssteuerleitung versagt, eine Abbremsung des Anhängers mit dem vollen Druck des Behälters des Anhängers.

DE 1 580 119 A1 betrifft ebenfalls ein herkömmliches automatisch lastabhängiges Bremsdruckventil, welches über einen Verstellhebel und einen Betätigungshebel an eine gefederte Achse angebunden ist. Der Verstellhebel verdreht eine Verstellwelle, die sich durch das Ventilgehäuse erstreckt und im Inneren des Ventilgehäuses drehfest mit einem Hebel verbunden ist. Die Verdrehung des Hebels je nach Einfederung der ungefederten Achse verändert den Abstützhebelarm eines Betätigungsstößels an einer Betätigungswippe. Der Betätigungsstößel wird dabei beaufschlagt von einem Kolben, auf dessen Kolbenfläche der eingangsseitige Bremsanforderungsdruck wirkt. Auf der anderen Seite betätigt die Betätigungswippe mit einem nicht veränderbaren Hebelarm ein Ein-/Auslassventil, welches den für den Bremszylinder bestimmten Bremsdruck aussteuert. Die Veränderung der Umwandlungscharakteristik des lastabhängigen Bremsdruckventils erfolgt hier mittels einer Veränderung der Hebelverhältnisse an der Betätigungswippe durch Veränderung des Abstützhebelarms des Betätigungsstößels an der Betätigungswippe je nach Verschwenkung der Verstellwelle. Zusätzlich ist eine manuelle Veränderung der Lage der Betätigungswippe und damit eine manuelle Veränderung der Umwandlungscharakteristik des Bremsdruckventils dadurch möglich, dass eine Schneide, an welcher die Betätigungswippe verschwenkbar abgestützt ist, von einer sich durch das Ventilgehäuse erstreckenden Schraube ausgebildet ist, wobei durch Veränderung des Einschraubwinkels der Schraube die Position der Schneide verändert werden kann.

Schließlich offenbart auch US 3, 586, 389 A ein herkömmliches lastabhängiges Bremsdruckventil, bei welchem eine Verstellwelle über einen Verstellhebel mit einer gefederten Achse verbunden ist. Als Besonderheit ist hier der Verstellhebel elastisch ausgebildet, indem dieser im Bereich der drehfesten Verbindung mit der Verstellwelle eine Torsionsfeder aufweist. Die Torsionsfeder soll dabei für eine langsame Änderung der Last infolge einer Veränderung der Beladung die Verdrehung der Verstellwelle und damit die Veränderung der Umwandlungscharakteristik hervorrufen. Andererseits soll die Feder dynamisch so abgestimmt sein, dass dynamische Einfederungen der gefederten Achse nicht zu einer Verdrehung der Verstellwelle und damit einer Veränderung der Umwandlungscharakteristik führen sollen.

### AUFGABE DER ERFINDUNG

Der Erfindung liegt die Aufgabe zugrunde, ein lastabhängiges Bremsdruckventil vorzuschlagen, welches für einen Einsatz im Zusammenhang mit einem nicht (oder nicht wesentlich) gefederten Fahrzeuganhänger bestimmt ist und hinsichtlich
- der Montage und/oder Demontage und/oder
- der Bauraumverhältnisse und/oder
- der Wartung und/oder
- der Möglichkeiten einer Lastanpassung des Bremsdruckventils
verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Das erfindungsgemäße lastabhängige Bremsdruckventil weist ein Ventilgehäuse auf, dass einen Eingangsanschluss für einen Eingangs-Bremsdruck, bei dem es sich um den Bremssteuerdruck handeln kann, und einen Ausgangsanschluss für einen Ausgangs-Bremsdruck, der insbesondere dem Bremszylindern zugeführt wird, hat. Eine Umwandlung des Eingangs-Bremsdrucks in den Ausgangs-Bremsdruck mit einer Umwandlungscharakteristik erfolgt über Ventilelemente, die grundsätzlich gemäß den Ventilelementen für die Erzeugung der Umwandlungscharakteristik entsprechend dem eingangs genannten Stand der Technik ausgebildet sein können. Aus dem Ventilgehäuse kragt eine Verstellwelle auf. Die Verstellwelle ist mit den Ventilelementen derart gekoppelt, dass eine Verdrehung der Verstellwelle relativ zu dem Ventilgehäuse eine Veränderung der Umwandlungscharakteristik zur Folge hat, womit unterschiedlichen Lastzuständen Rechnung getragen werden kann. Hierbei kann die Veränderung der Umwandlungscharakteristik eine beliebige Veränderung der Abhängigkeit des Ausgangs-Bremsdrucks von dem Eingangs-Bremsdruck sein. Ein Verstellelement (welches gemäß dem eingangs genannten Stand der Technik als Verstellhebel ausgebildet sein kann) ist mit der Verstellwelle so verbunden, dass zwischen Verstellelement und Verstellwelle ein Drehmoment übertragen werden kann. Das Verstellelement (insbesondere der Verstellhebel) kann in unterschiedlichen Verstellpositionen mittels einer Fixiereinrichtung an dem Ventilgehäuse oder (wie dies für den Stand der Technik EP 3 450 269 A1 der Fall ist) an einer Konsole, die fest mit dem Ventilgehäuse verbunden ist (unter Umständen gemäß EP 3 450 269 A1 über das Chassis), fixiert werden. Die Abstützung der Verstellwelle an dem Ventilgehäuse oder an der Konsole erfolgt somit über einen Abstützpfad, der über die Verbindung, über die das Verstellelement mit der Verstellwelle verbunden ist, das Verstellelement (insbesondere der Verstellhebel) und die Fixiereinrichtung verläuft. Insoweit kann das erfindungsgemäße lastabhängige Bremsdruckventil grundsätzlich gemäß dem aus dem Stand der Technik bekannten Ausführungsformen (oder auch anders) ausgebildet sein.

Der Erfindung liegt vor diesem Hintergrund die Erkenntnis zugrunde, dass bei den bekannten lastabhängigen Bremsdruckventilen die Übertragungseinrichtung, welche in Folge einer Verdrehung der Verstellwelle eine Veränderung der Umwandlungscharakteristik herbeiführt, eine Selbsthemmung derart aufweist, dass bei Druckbeaufschlagung des Eingangsanschlusses mit dem Bremssteuerdruck und/oder des Ausgangsanschlusses keine Verdrehung der Verstellwelle möglich ist. In DE 30 06 800 C2 ist hierzu ausgeführt, dass die Belastung der Übertragungseinrichtung zu einer mechanischen Verrieglung der jeweils eingestellten Übersetzung, also der eingestellten Umwandlungscharakteristik, führt, sodass während eines Bremsvorgangs keine Verstellung der Übertragungseinrichtung erfolgt. Auf diese Weise soll vermieden werden, dass eine Veränderung der Umwandlungscharakteristik auch dann erfolgt, wenn sich eine dynamische Einfederung einer Achse ohne Veränderung der Beladung in Folge der erzeugten Bremskraft ergibt, beispielsweise in Folge einer durch die Bremskraft hervorgerufenen dynamischen Nickbewegung. Somit kann gemäß EP 3 450 269 A1 infolge der Selbsthemmung des lastabhängigen Bremsdruckventils eine Anpassung des Bremsdruckventils an eine veränderte Beladung nur dann erfolgen, wenn an dem Eingangsanschluss und/oder an dem Ausgangsschluss des Bremsdruckventils kein Druck anliegt. Dies erfordert aber, dass für einen Verstellung des Verstellhebels gemäß EP 3 450 269 A1 entweder ein Fahrzeugzug, der aus einem Zugfahrzeug und einem Fahrzeuganhänger besteht, ausschließlich über das Zugfahrzeug abgebremst sein muss oder sogar der gesamte Zug oder der abgekoppelte Fahrzeuganhänger nicht gebremst ist, was zu einer signifikanten Beeinträchtigung der Betriebssicherheit führen kann.

Für die erfindungsgemäße Lösung ist der Abstützpfad kein "starrer Abstützpfad". Vielmehr weist der Abstützpfad, über den die Verstellwelle an dem Ventilgehäuse oder an der Konsole abgestützt ist, einen Freiheitsgrad auf. Dies bedeutet, dass bei einer etwaigen Selbsthemmung des Übertragungsmechanismus zwar die Verstellwelle nicht ohne Weiteres und unmittelbar verdreht werden kann. In Folge des Freiheitsgrades des Abstützpfades kann dennoch eine manuelle Veränderung (beispielsweise der Stellung des Verstellelements und/oder der Fixiereinrichtung) herbeigeführt werden. Diese Veränderung wird dann erst an die Verstellwelle weitergegeben, wenn die Selbsthemmung beseitigt ist, also in einem Betriebszustand, in welchem der an dem Eingangsanschluss und/oder dem Ausgangsanschluss anliegende Druck temporär zumindest reduziert ist. Als Energiequelle für diese spätere Verdrehung der Verstellwelle dient eine in den Abstützpfad integrierte Feder, die durch manuelle Betätigung des Verstellelements gespannt wird. Die Feder erzeugt bei einer relativen Auslegung entlang des Freiheitsgrades aus einer Gleichgewichtslage eine Rückstellkraft oder ein Rückstellmoment, welches in Richtung der Gleichgewichtslage wirkt. Tritt somit die Selbsthemmung des Übertragungsmechanismus ein, kann ohne Verdrehung der Verstellwelle eine relative Auslenkung des Verstellelements aus der Gleichgewichtslage entlang des Freiheitsgrades erfolgen, womit die Feder (weiter) gespannt wird und eine Rückstellkraft oder ein Rückstellmoment in Richtung der Gleichgewichtslage erzeugt. Die Rückstellkraft oder das Rückstellmoment wirkt auch auf die Verstellwelle, die sich aber in Folge der Selbsthemmung nicht verdrehen kann. Erst wenn die Selbsthemmung in Folge der Reduzierung oder Beseitigung des Drucks entfallen ist, kann durch die Rückstellkraft oder das Rückstellmoment der Feder die angestrebte Verdrehung der Verstellwelle erfolgen. Erfindungsgemäß kann somit auch eine manuelle lastabhängige Anpassung des Bremsdruckventils vorgenommen werden, wenn der Fahrzeuganhänger gebremst ist, womit eine signifikante Erhöhung der Betriebssicherheit erfolgt und/oder eine Bedienung signifikant vereinfacht wird, da eine Beseitigung der Bremskraft des Fahrzeuganhängers nicht zwingend erforderlich ist.

Im Rahmen der Erfindung können der Freiheitsgrad und die Feder an beliebiger Stelle in dem Abstützpfad angeordnet sein, beispielsweise zwischen der Konsole und deren Abstützung an dem Chassis oder Ventilgehäuse, in Form einer Elastizität des Verstellhebels, in Form einer Elastizität zwischen dem Verstellhebel und dem Verrieglungsstift u. ä. Für einen besonderen Vorschlag ist der Freiheitsgrad ein Dreh-Freiheitsgrad, der im Bereich der Verbindung, über die das Verstellelement mit der Verstellwelle verbunden ist, bereitgestellt wird, insbesondere im Bereich der Welle-Nabe-Verbindung zwischen Verstellelement (insbesondere Verstellhebel) und Verstellwelle. Für diese Ausführungsform ist die Feder mit einem Federfußpunkt an dem Verstellelement abgestützt und mit einem Federfußpunkt an der Verstellwelle abgestützt, sodass die Feder bei einer als relative Drehwinkel-Auslenkung ausgebildeten Auslenkung zwischen dem Verstellelement und der Verstellwelle aus der Gleichgewichtslage ein Rückstellmoment in Richtung der Gleichgewichtslage erzeugt, welches für die Verdrehung der Verstellwelle verantwortlich ist. Die Integration des Dreh-Freiheitsgrades in die Verbindung zwischen Verstellelement und Verstellwelle ist vorteilhaft hinsichtlich der Bauraumverhältnisse und stellt eine besonders zuverlässige Lösung dar.

In weiterer Ausgestaltung dieses Lösungsgedankens ist die Feder als Schenkelfeder ausgebildet, wobei die beiden Federfußpunkte als Schenkel der Schenkelfeder ausgebildet sind. Sowohl das Verstellelement als auch die Verstellwelle weisen für diese Weiterbildung einen Mitnehmer auf. Der Mitnehmer der Verstellwelle und der Mitnehmer des Verstellelements sind in der Gleichgewichtslage zwischen den Schenkeln der Schenkelfeder (mit einem Spiel oder vorzugsweise spielfrei) gefangen. Kommt es zu einer Verdrehung des Verstellelements relativ zu der Verstellwelle aus der Gleichgewichtslage in eine erste Drehrichtung, ist ein erster Schenkel der Schenkelfeder an dem Mitnehmer der Verstellwelle abgestützt, während ein zweiter Schenkel der Schenkelfeder an dem Mitnehmer des Verstellelements abgestützt ist. Diese Abstützung führt zu einem ersten Rückstellmoment der Schenkelfeder, die entgegen der ersten Drehrichtung auf die Verstellwelle wirkt. Erfolgt hingegen eine Verdrehung des Verstellelements relativ zu der Verstellwelle aus der Gleichgewichtslage in eine zweite Drehrichtung, ist der erste Schenkel der Schenkelfeder an dem Mitnehmer des Verstellelements abgestützt, während der zweite Schenkel der Schenkelfeder an dem Mitnehmer der Verstellwelle abgestützt ist. Somit ergibt sich ein zweites Rückstellmoment, in Folge dessen die Verstellwelle entgegen der zweiten Drehrichtung beaufschlagt wird. Gemäß dieser Weiterbildung kann durch Einsatz einer einzigen Schenkelfeder und deren Wechselwirkung mit den beiden Mitnehmern ein Rückstellmoment in die Gleichgewichtslage für beide Drehrichtungen, also beide Richtungen der lastabhängigen Verstellung, herbeigeführt werden. Dies ist vorteilhaft einerseits für die Kosten und andererseits ergibt sich auch eine besonders kompakte Ausgestaltung mit einer geringen Zahl erforderlicher Bauelemente.

Für eine besondere Ausgestaltung dieser Lösung ist die Verstellwelle multifunktional eingesetzt, in dem auf dieser die Schenkelfeder abgestützt und/oder geführt ist, wobei sich ein Wellenabschnitt der Verstellwelle durch Windungen der Schenkelfeder hindurch erstrecken kann.

Vorzugweise ist das Verstellelement als Verstellhebel ausgebildet. Der Verstellhebel erstreckt sich quer zur Drehachse der Verstellwelle. Ein erster Endbereich des Verstellhebels ist mit der Verstellwelle (insbesondere unter Gewährleistung des Dreh-Freiheitsgrades und der hier wirkenden Feder oder Schenkelfeder) verbunden. Ein zweiter Endbereich des Verstellhebels ist dann über die Fixiereinrichtung an dem Ventilgehäuse oder der Konsole abgestützt.

Grundsätzlich gibt es für die Ausgestaltung der Fixiereinrichtung, über die das Verstellelement in unterschiedlichen Verstellpositionen an dem Ventilgehäuse oder der Konsole fixiert werden kann, im Rahmen der Erfindung vielfältige Möglichkeiten. So kann eine reibschlüssige Fixiereinrichtung, eine Klemmeinrichtung, eine Rasteinrichtung, eine Verrieglungseinrichtung, eine unterschiedliche Verstellpositionen gewährleistende Verschraubung u. ä. Einsatz finden, wobei dabei eine Fixierung stufenlos oder in Stufen möglich sein kann. Möglich ist auch, dass die Fixiereinrichtung so ausgebildet ist, wie dies in der Druckschrift EP 3 450 269 A1 beschrieben ist.

Für eine Ausführungsform der Erfindung weist die Fixiereinrichtung ein Umfangssegment auf, welches von dem Verstellhebel ausgebildet ist. Das Umfangssegment weist mindestens zwei Ausnehmungen auf. Diese Ausnehmungen sind in dem Umfangssegment (im gleichen Radius von der Drehachse der Verstellwelle) gleichmäßig oder ungleichmäßig über den Umfang verteilt angeordnet. Die Fixiereinrichtung verfügt darüber hinaus über ein Fixierelement. Das Fixierelement ist parallel zur Drehachse der Verstellwelle relativ zu dem Ventilgehäuse oder der Konsole entlang eines Verschiebe-Freiheitsgrades verschiebbar. Für diese Ausführungsform ist der Verstellhebel in unterschiedlichen Verstellpositionen fixierbar, in dem das Fixierelement in eine der Ausnehmungen, die der jeweiligen zu fixierenden Verstellpositionen zugeordnet sind, eintritt. Das Verstellelement und dessen Umfangssegment kann somit mit den mindestens zwei Ausnehmungen einfach gestaltet werden, während die Gewährleistung des Verschiebe-Freiheitsgrades des Fixierelements an dem gegenüber dem Verstellhebel massiver bauenden und/oder steiferen Ventilgehäuse oder an der Konsole erfolgen kann. Diese Ausführungsform kann vorteilhaft gegenüber der aus EP 3 450 269 A1 bekannten Ausführungsform sein, bei der das Fixierelement, welches ein arretierbares Element bildet, aufwendig mit einem Verschiebe-Freiheitsgrad an dem Verstellhebel geführt sein muss, während der konstruktiv einfach ausgestaltete Kulisse mit den Ausnehmungen an der Konsole vorgesehen werden.

Möglich ist, dass die Führung des Fixierelementes an dem Ventilgehäuse unter Zwischenschaltung einer Fixierstrebe erfolgt, die an dem Ventilgehäuse befestigt ist und an welcher das Fixierelement verschiebbar geführt ist. Durch die Gestaltung der Geometrie der Fixierstrebe kann einerseits die Abstützung an dem Ventilgehäuse an einem geeigneten Ort erfolgen und andererseits die Führung des Fixierelements an dem Ort erfolgen, wo eine gute Wechselwirkung mit den Ausnehmungen des Umfangssegments des Verstellhebels erfolgen kann.

Möglich ist, dass zwischen der Fixierstrebe und dem Fixierelement eine Feder wirkt. Die Feder beaufschlagt das Fixierelement in Richtung des Verschiebe-Freiheitsgrads in seine fixierende Stellung, sodass die Feder gewährleistet, dass eine einmal manuell eingestellte Last bzw. eine manuelle Vorgabe einer lastabhängigen Umwandlungscharakteristik nicht ungewollt verändert wird, was beispielsweise auch dann gilt, wenn Vibrationen auf die Fixiereinrichtung wirken in Folge einer Fahrt des Fahrzeuganhängers über einen unebenen Untergrund.

In weiterer Ausgestaltung weist das Ventilgehäuse einen Chassis-Befestigungsbereich auf. Über den Chassis-Befestigungsbereich ist die Fixiereinrichtung an dem Chassis befestigt - abweichend zu EP 3 450 269 A1 erfolgt somit nicht das Halten der Fixiereinrichtung (dort der Kulisse) an einer an dem Chassis abgestützten Konsole. Vielmehr ist die Fixiereinrichtung über das Ventilgehäuse an dem Chassis befestigt.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein lastabhängiges Bremsdruckventil in einer Vorderansicht.

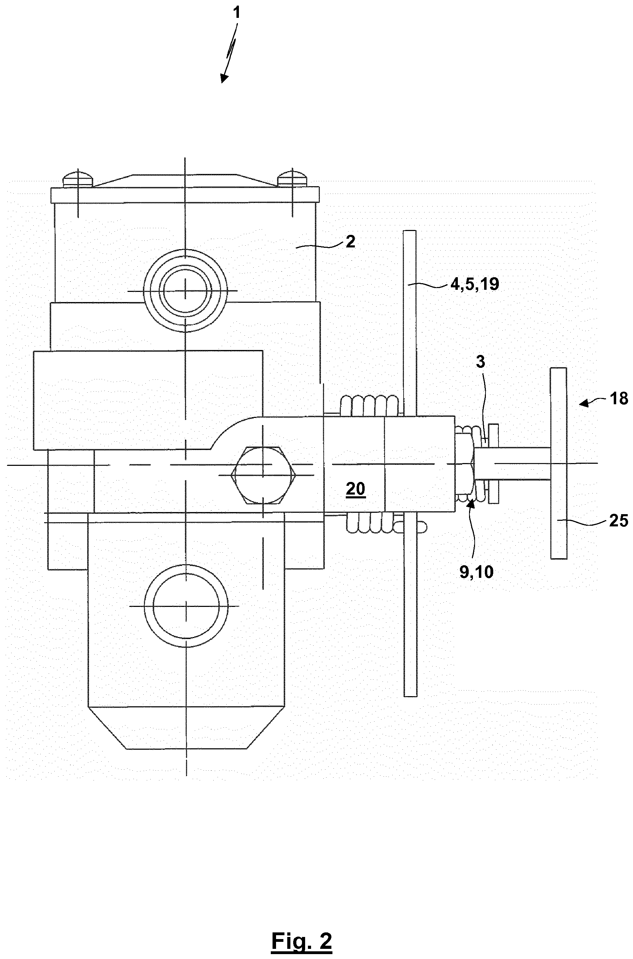

- **Fig. 2**: zeigt das lastabhängige Bremsdruckventil gemäß Fig. 1 in einer Seitenansicht von links.
- **Fig. 3**: zeigt das lastabhängige Bremsdruckventil gemäß Fig. 1 und 2 in einer Ansicht von oben

### FIGURENBESCHREIBUNG

In der folgenden Figurenbeschreibung wird auf den inneren Aufbau des Bremsdruckventils, dessen Ventilelemente und die Ausgestaltung der Übertragungseinrichtung zur Veränderung der Umwandlungscharakteristik nicht im Detail eingegangen. Vielmehr können die Ventilelemente und die Übertragungseinrichtung (sowie etwaige weitere Funktionen des Bremsdruckventils wie eine Notbremsfunktion) bis auf die mit der Verstellwelle außerhalb des Ventilgehäuses des Bremsdruckventils angeordneten Bauelemente entsprechend den aus dem Stand der Technik bekannten Ausführungsformen (siehe auch den eingangs aufgelisteten Stand der Technik) ausgebildet sein.

Die Figuren zeigen ein lastabhängiges Bremsdruckventil 1. Das Bremsdruckventil 1 verfügt über ein Ventilgehäuse 2. Auf der Vorderseite des Bremsdruckventils 1 erstreckt sich aus dem Ventilgehäuse 2 die Verstellwelle 3 heraus. Die Verstellwelle 3 ist mit einem Verstellelement 4, bei dem es sich hier um einen Verstellhebel 5 handelt, über eine Verbindung 6 verbunden. Die Verbindung 6 überträgt ein Drehmoment zwischen dem Verstellhebel 5 und der Verstellwelle 3, ist aber keine drehfeste Verbindung. Vielmehr verfügt die Verbindung 6 über einen (begrenzten) Dreh-Freiheitsgrad 7. In Folge des Dreh-Freiheitsgrads 7 ist eine Verschwenkung des Verstellhebels 5 um eine Drehachse 8 der Verstellwelle 3 möglich, ohne das zwingend mit dem Verstellhebel 5 auch die Verstellwelle 3 um die Drehachse 8 mitgedreht wird.

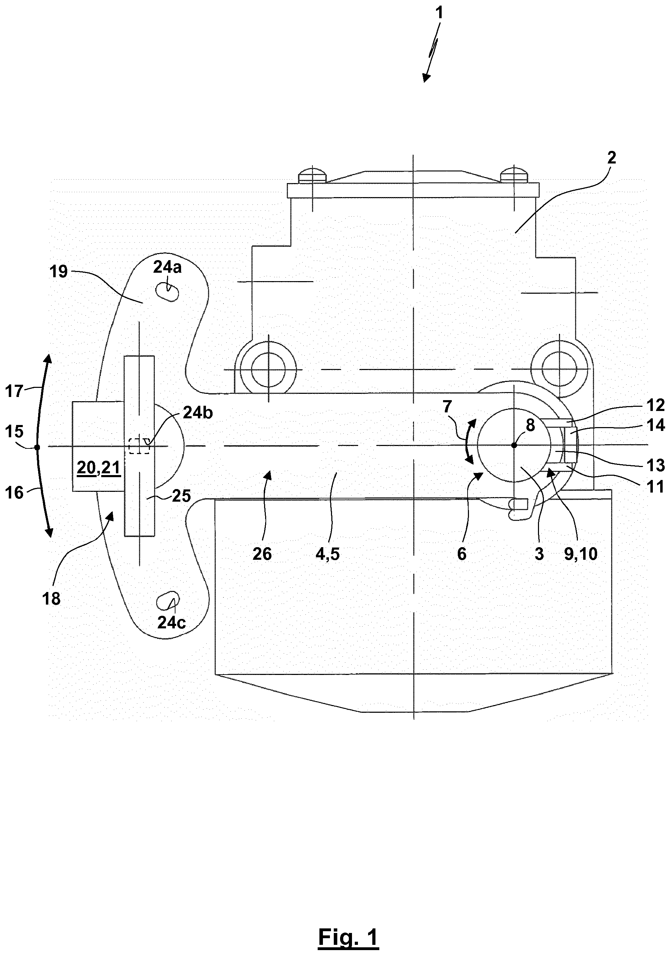

In dem außenliegenden Endbereich ist auf der Verstellwelle 3 eine Feder 9, hier eine Schenkelfeder 10, angeordnet und geführt, indem Windungen der Schenkelfeder 10 die Verstellwelle 3 umschließen. Die Schenkelfeder 10 bildet endseitig Schenkel 11, 12 aus, die unter Ausbildung eines Zwischenraumes in der in Fig. 1 dargestellten Gleichgewichtslage 15 parallel zueinander orientiert sind. An der Verstellwelle 3 ist ein Mitnehmer 13 gehalten oder die Verstellwelle 3 bildet einen Mitnehmer 13 aus. Entsprechend ist an dem Verstellhebel 5 ein Mitnehmer 14 gehalten oder der Verstellhebel 5 bildet den Mitnehmer 14 aus. Die beiden Mitnehmer 13, 14 sind in dem Zwischenraum zwischen den Schenkeln 11, 12 der Schenkelfeder 10 angeordnet und zwischen den Schenkeln 11, 12 gefangen. Ohne dass dies zwingend der Fall ist, können die Mitnehmer 13, 14 beide auf beiden Seiten an den Schenkeln 11, 12 anliegen.

Wird der Verstellhebel 5 aus der in Fig. 1 dargestellten Gleichgewichtslage 15 in eine erste Drehrichtung 16 verschwenkt und ist eine Verdrehung der Verstellwelle 3 in Folge der Selbsthemmung nicht möglich, liegt der Schenkel 11 weiterhin an dem Mitnehmer 13 an, während sich in Folge der Verschwenkung in die erste Drehrichtung 16 der Mitnehmer 14 von dem Schenkel 11 entfernt. Der Mitnehmer 14 nimmt dann den Schenkel 12 in die erste Drehrichtung 16 mit, womit sich der Schenkel 12 von dem Mitnehmer 13 entfernt. In Folge der Verdrehung des Verstellhebels 5 in die erste Drehrichtung 16 wird somit die Schenkelfeder 10 mit einem ersten Rückstellmoment gespannt. Kommt es in Folge der Reduzierung des Drucks in dem Bremsdruckventil 1 zur Beseitigung der Selbsthemmung der Übertragungseinrichtung, wird das erste Rückstellmoment über den Schenkel 11 auf den Mitnehmer 13 der Verstellwelle 3 übertragen, was die Verdrehung der Verstellwelle 3 in die erste Drehrichtung 16 zur Folge hat.

Erfolgt hingegen, ebenfalls für eine Selbsthemmung des Übertragungsmechanismus, eine Verdrehung des Verstellhebels 5 aus der Gleichgewichtslage 15 eine zweite Drehrichtung 17, löst sich der Mitnehmer 14 von dem Schenkel 12, während der Mitnehmer 14 den Schenkel 11 mitnimmt. Der Schenkel 12 liegt dann weiterhin an dem Mitnehmer 13 an, während sich der Schenkel 11 von dem Mitnehmer 13 weg bewegt. Die hiermit einhergehende Verspannung der Schenkelfeder 10 erzeugt ein zweites Rückstellmoment. Mit Beseitigung der Selbsthemmung des Übertragungsmechanismus kann der Schenkel 12 das zweite Rückstellmoment an den Mitnehmer 13 übertragen, womit die Verdrehung der Verstellwelle 3 in die zweite Drehrichtung 17 erfolgt.

Der Verstellhebel 5 kann in unterschiedlichen Verstellpositionen, nämlich Winkelstellungen, über eine Fixiereinrichtung 18 (unmittelbar oder mittelbar) an dem Ventilgehäuse 2 fixiert werden. Zu diesem Zweck weist der Verstellhebel 5 in dem der Drehachse 8 abgewandten Endbereich ein Umfangssegment 19 auf, in welchem (hier gleichmäßig) über den Umfang verteilt Ausnehmungen 24a, 24b, 24c vorhanden sind. Die Ausnehmungen 24a, 24b, 24c sind in demselben Radius von der Drehachse 8 in dem Umfangssegment 19 vorgesehen.

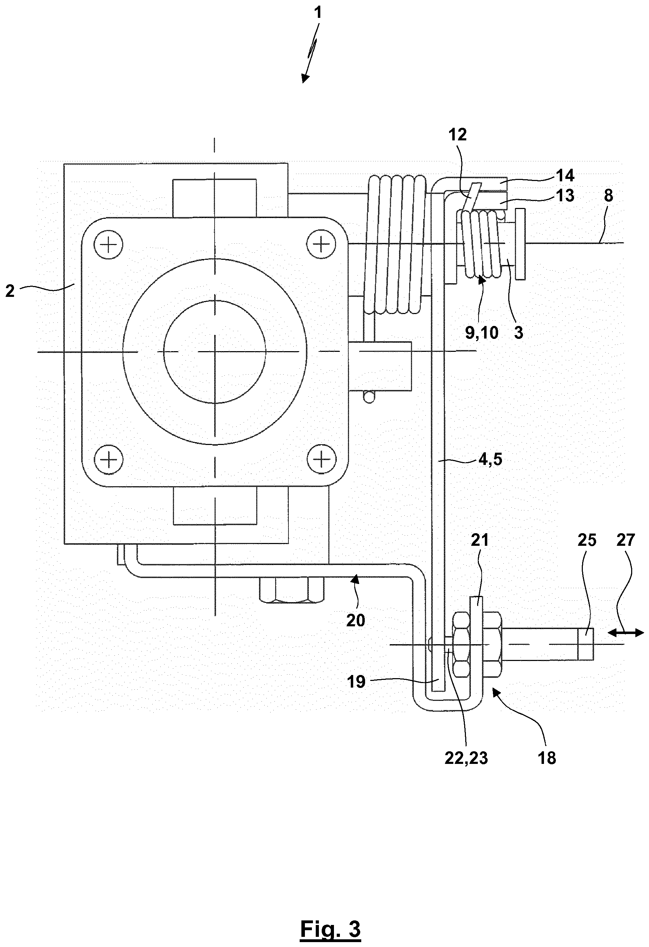

An dem Ventilgehäuse 2 ist eine Fixierstrebe 20 befestigt, was vorzugsweise durch Verschrauben der Fixierstrebe 20 mit dem Ventilgehäuse 2 erfolgt. Die Fixierstrebe 20 ist geeignet geformt und abgewinkelt derart, dass ein Fixierstrebenabschnitt 21 mit einem kleinen Abstand vor dem Verstellhebel 5 angeordnet ist und sich parallel zu der Schwenkebene des Verstellhebels 5 erstreckt (vgl. Fig. 3). Der Fixierstrebenabschnitt 21 trägt ein Fixierelement 22, welches hier als Fixierstift 23 ausgebildet ist. In einer verriegelten Stellung des Fixierstiftes 23 findet der Fixierstift 23 (je nach Verstellposition des Verstellhebels 5) Aufnahme in einer Ausnehmung 24a, 24b, 24c, womit die Verstellposition des Verstellhebels 5 arretiert und verriegelt ist. Manuell kann der Fixierstift 23, insbesondere mittels eines Handgriffs 25, aus der Ausnehmung 24a, 24b, 24c entlang eines Verschiebe-Freiheitsgrads 27 in eine entriegelte Stellung herausgezogen werden, womit dann eine freie Verschwenkung des Verstellhebels 5 möglich ist und eine andere Ausnehmung 24a, 24b, 24c in eine axial mit dem Fixierstift 23 fluchtende Verstellposition gebracht werden kann, in der dann wieder die verriegelte Stellung des Fixierstiftes 23 herbeigeführt werden kann. Der für die Bewegung zwischen der verriegelten Stellung und der entriegelten Stellung des Fixierstiftes 23 erforderliche Verschiebe-Freiheitsgrad 27 kam dabei durch eine Elastizität der Fixierstrebe 20 gewährleistet werden. Möglich ist auch, dass der Fixierstift 23 und der damit verbundene Handgriff 25 verschieblich entlang des Verschiebe-Freiheitsgrads 27 gegenüber dem Fixierstrebenabschnitt 21 geführt sind, wobei auch zwischen dem Fixierstrebenabschnitt 21 und dem Handgriff 25 oder dem Fixierstift 23 eine Verrieglungsfeder wirken kann, welche den Fixierstift 23 in Richtung des Verschiebe-Freiheitsgrads 27 in die verriegelte Stellung beaufschlagt.

Ein Abstützpfad 26, über den die Verstellwelle 3 hinsichtlich ihrer Verdrehung an der Konsole oder dem Ventilgehäuse 2 abgestützt ist, verläuft von der Verstellwelle 3 über die Verbindung 6 mit der Schenkelfeder 10, den Schenkeln 11, 12 und den Mitnehmern 13, 14 zu dem Verstellhebel 5 und von diesem über die Fixiereinrichtung 18 mit den Ausnehmungen 24 und dem Fixierstift 23 zu der Fixierstrebe 20 sowie die Befestigung der Fixierstrebe 20 an dem Ventilgehäuse 2 zu dem Ventilgehäuse 2.

Durch eine Verstellung des Verstellhebels 5 mittels einer manuelle Vorgabe durch den Benutzer kann eine lastabhängige Beeinflussung der Umwandlungscharakteristik erfolgen, wobei die Verstellung zur Berücksichtigung einer Beladung eines Anhängerfahrzeugs und/oder zur Berücksichtigung des Gewichts des Anhängerfahrzeugs selber (insbesondere zur Berücksichtigung eines Typs des Anhängerfahrzeugs, von Aufbauten des Anhängefahrzeugs u. ä.) erfolgen kann. Darüber hinaus ist möglich, dass durch die Verstellung eine Anpassung des Bremsdruckventils 1 an unterschiedliche Typen von an einem Anhängerfahrzeug eingesetzten Bremsanlagen und/oder unterschiedliche Zugfahrzeuge des Anhängefahrzeugs, die spezifische Bremssteuerdrucke erzeugen, erfolgt.

Für das dargestellte Ausführungsbeispiel ist die Fixiereinrichtung 18 über die Fixierstrebe 20 an dem Ventilgehäuse 2 montiert und abgestützt. Im Rahmen der Erfindung ist aber durchaus möglich, dass die Fixiereinrichtung 18 unmittelbar von dem Ventilgehäuse 2 ausgebildet oder an diesem abgestützt ist. Um lediglich ein Beispiel für eine derartige Ausgestaltung zu nennen, kann das Ventilgehäuse 2 eine Führung oder Bohrung aufweisen, in der ein Raststift oder eine Rastkugel geführt ist, wobei der Raststift oder die Rastkugel über eine Feder nach außen in Richtung des Umfangssegments 19 beaufschlagt ist. Weist in diesem Fall das Umfangsegment 19 auf der dem Raststift oder der Rastkugel zugewandten Seite mehrere über den Umfang verteilte Rastausnehmungen auf, kann der Raststift oder die Rastkugel in den unterschiedlichen Winkelstellungen des Verstellhebels 5 in eine zugeordnete Rastausnehmung eintreten, womit eine Rastierung des Verstellhebels 5 in dieser Winkelstellung erfolgen kann. Entsprechend kann auch von dem Ventilgehäuse 2 eine Verriegelungseinrichtung, eine Klemmeinrichtung oder eine reibschlüssig sichernde Einrichtung zur Fixierung des Verstellhebels 5 ausgebildet sein oder diese kann an dem Ventilgehäuse 2 gehalten sein.

### BEZUGSZEICHENLISTE

- 1: lastabhängiges Bremsdruckventil
- 2: Ventilgehäuse
- 3: Verstellwelle
- 4: Verstellelement
- 5: Verstellhebel
- 6: Verbindung
- 7: Dreh-Freiheitsgrad
- 8: Drehachse
- 9: Feder
- 10: Schenkelfeder
- 11: Schenkel
- 12: Schenkel
- 13: Mitnehmer
- 14: Mitnehmer
- 15: Gleichgewichtslage
- 16: erste Drehrichtung
- 17: zweite Drehrichtung
- 18: Fixiereinrichtung
- 19: Umfangssegment
- 20: Fixierstrebe
- 21: Fixierstrebenabschnitt
- 22: Fixierelement
- 23: Fixierstift
- 24: Ausnehmung
- 25: Handgriff
- 26: Abstützpfad
- 27: Verschiebe-Freiheitsgrad

## Patentansprüche

1. Lastabhängiges Bremsdruckventil (1) mit
a) einem Ventilgehäuse (2) mit einem Eingangsanschluss für einen Eingangs-Bremsdruck und einem Ausgangsanschluss für einen Ausgangs-Bremsdruck,
b) Ventilelementen, welche den Eingangs-Bremsdruck einsprechend einer Umwandlungscharakteristik umwandeln in den Ausgangs-Bremsdruck,
c) einer aus dem Ventilgehäuse (2) auskragenden Verstellwelle (3), welche mit den Ventilelementen derart gekoppelt ist, dass eine Verdrehung der Verstellwelle (3) relativ zu dem Ventilgehäuse (2) eine Veränderung der Umwandlungscharakteristik zur Folge hat, und
d) einem Verstellelement (4), welches außerhalb des Ventilgehäuses (2) angeordnet ist und
da) mit der Verstellwelle (3) mit einer ein Drehmoment übertragenden Verbindung (6) verbunden ist,
db) in unterschiedlichen Verstellpositionen mittels einer Fixiereinrichtung (18) an dem Ventilgehäuse (2) oder einer Konsole, die fest mit dem Ventilgehäuse (2) verbunden ist, fixierbar ist,
e) wobei die Verstellwelle (3) über einen Abstützpfad (26), der über die Verbindung (6), über die das Verstellelement (4) mit der Verstellwelle (3) verbunden ist, das Verstellelement (4) und die Fixiereinrichtung (18) verläuft, an dem Ventilgehäuse (2) oder an der Konsole abgestützt ist,
**dadurch gekennzeichnet, dass**
f) der Abstützpfad (26)
fa) einen Freiheitsgrad aufweist und
fb) mindestens eine Feder (9) aufweist, die bei einer relativen Auslenkung entlang des Freiheitsgrades aus einer Gleichgewichtslage (15) eine Rückstellkraft oder ein Rückstellmoment in Richtung der Gleichgewichtslage (15) erzeugt.

2. Bremsdruckventil (1) nach Anspruch 1, **dadurch gekennzeichnet, dass** die Verbindung (6), über die das Verstellelement (4) mit der Verstellwelle (3) verbunden ist und die das Drehmoment überträgt, den Freiheitsgrad in Form eines Dreh-Freiheitsgrades (7) aufweist und die Feder eine Feder ist, die mit mindestens einem Federfußpunkt an dem Verstellelement (4) abgestützt ist und mit mindestens einem Federfußpunkt an der Verstellwelle (3) abgestützt ist und bei einer als relative Drehwinkel-Auslenkung ausgebildeten relativen Auslenkung zwischen dem Verstellelement (4) und der Verstellwelle (3) aus der Gleichgewichtslage (15) ein Rückstellmoment in Richtung der Gleichgewichtslage (15) erzeugt.

3. Bremsdruckventil (1) nach Anspruch 2, **dadurch gekennzeichnet, dass**
a) die Feder eine Schenkelfeder (10) ist, bei der die beiden Federfußpunkte als Schenkel (11, 12) ausgebildet sind,
b) dem Verstellelement (4) und der Verstellwelle (3) jeweils ein Mitnehmer (13, 14) zugeordnet ist und
c) der Mitnehmer (13) der Verstellwelle (3) und der Mitnehmer (14) des Verstellelements (4) zwischen den Schenkeln (11, 12) der Schenkelfeder (10) gefangen sind und
d) bei einer Verdrehung des Verstellelements (4) relativ zu der Verstellwelle (3) in eine erste Drehrichtung (16) ein erster Schenkel (11) der Schenkelfeder (10) an dem Mitnehmer (13) der Verstellwelle (3) abgestützt ist, während ein zweiter Schenkel (12) der Schenkelfeder (10) an dem Mitnehmer (14) des Verstellelements (4) abgestützt ist, und
e) bei einer Verdrehung des Verstellelements (4) relativ zu der Verstellwelle (3) in eine zweite Drehrichtung (17) der erste Schenkel (11) der Schenkelfeder (10) an dem Mitnehmer (14) des Verstellelements (4) abgestützt ist, während der zweite Schenkel (12) der Schenkelfeder (10) an dem Mitnehmer (13) der Verstellwelle (3) abgestützt ist.

4. Bremsdruckventil (1) nach Anspruch 3, **dadurch gekennzeichnet, dass** die Schenkelfeder (10) auf der Verstellwelle (3) abgestützt und/oder geführt ist.

5. Bremsdruckventil (1) nach einem der vorhergehenden Ansprüche, **dadurch gekennzeichnet, dass** das Verstellelement (4) ein Verstellhebel (5) ist, der sich quer zu einer Drehachse (8) der Verstellwelle (3) erstreckt, wobei ein erster Endbereich des Verstellhebels (5) über die Verbindung (6) mit der Verstellwelle (3) verbunden ist und ein zweiter Endbereich des Verstellhebels (5) über die Fixiereinrichtung (18) an dem Ventilgehäuse (2) oder der Konsole abgestützt ist.

6. Bremsdruckventil (1) nach Anspruch 5, **dadurch gekennzeichnet, dass**
a) die Fixiereinrichtung (18)
aa) ein von dem Verstellhebel (5) ausgebildetes Umfangssegment (19) mit mindestens zwei Ausnehmungen (24) und
ab) ein Fixierelement (22), welches an dem Ventilgehäuse (2) oder der Konsole mit einem Verschiebe-Freiheitsgrad (27) parallel zur Drehachse (8) der Verstellwelle (3) verschieblich geführt ist,
aufweist, und
b) der Verstellhebel (5) in unterschiedlichen Verstellpositionen fixierbar ist, indem das Fixierelement (22) in einer der Ausnehmungen (24), die den jeweiligen Verstellpositionen zugeordnet sind, angeordnet ist.

7. Bremsdruckventil (1) nach Anspruch 6, **dadurch gekennzeichnet, dass** eine Fixierstrebe (20) vorhanden ist, die an dem Ventilgehäuse (2) befestigt ist und an der das Fixierelement (22) verschiebbar geführt ist.

8. Bremsdruckventil (1) nach Anspruch 7, **dadurch gekennzeichnet, dass** zwischen der Fixierstrebe (20) und dem Fixierelement (22) eine Feder wirkt, die das Fixierelement (22) in Richtung seiner fixierenden Stellung beaufschlagt.

9. Bremsdruckventil (1) nach einem der vorhergehenden Ansprüche, **dadurch gekennzeichnet, dass** das Ventilgehäuse (2) einen Chassis-Befestigungsbereich aufweist, über den das Ventilgehäuse (2) an einem Chassis eines Fahrzeuganhängers befestigt werden kann, wobei die Fixiereinrichtung (18) unmittelbar an dem Ventilgehäuse (2) befestigt ist und die Fixiereinrichtung (18) gemeinsam mit dem Ventilgehäuse (2) über den Chassis-Befestigungsbereich an dem Chassis abgestützt ist.

## Claims

1. Load dependent brake pressure valve (1) comprising
a) a valve housing (2) with an inlet port for an inlet brake pressure and an outlet port for an outlet brake pressure,
b) valve elements which transform the inlet brake pressure corresponding to a transformation characteristic into an outlet brake pressure,
c) an adjustment shaft (3) protruding from the valve housing (2), the adjustment shaft (3) being coupled to the valve elements such that a rotation of the adjustment shaft (3) relatively to the valve housing (2) leads to a change of the transformation characteristic and
d) an adjustment element (4) which is arranged outside from the valve housing (2) and which da) is connected to the adjustment shaft (3) via a connection (6) transmitting a moment, db) can be fixed in different adjustment positions by means of a fixing device (18) to the valve housing (2) or a console which is fixedly connected to the valve housing (2)
e) wherein the adjustment shaft (3) is supported on the valve housing (2) or on the console via a supporting path (26) which runs along the connection (6) which connects the adjustment element (4) to the adjustment shaft (3), the adjustment element (4) and the fixing device (18),
**characterised in that**
f) the adjustment path (26)
fa) comprises a degree of freedom and
fb) comprises at least one spring (9) which for a relative displacement from the equilibrium position (15) along the degree of freedom generates a return force or a return moment towards the equilibrium position (15).

2. Brake pressure valve (1) of claim 1, **characterised in that** the connection (6) which connects the adjustment element (4) to the adjustment shaft (3) and transfers the moment comprises the degree of freedom being a rotational degree of freedom (7) and the spring is embodied as a spring which is supported by at last one spring base on the adjustment element (4) and which is supported by at least one spring base on the adjustment shaft (3) and which for a relative displacement between the adjustment element (4) and adjustment shaft (3) from the equilibrium position (15) embodied as a relative rotational displacement generates a return moment towards the equilibrium position (15).

3. Brake pressure valve (1) of claim 2, **characterised in that**
a) the spring is a leg spring (10) wherein the two spring bases are embodied as legs (11, 12),
b) followers (13, 14) are each associated with the adjustment element (4) and the adjustment shaft (3) and
c) the follower (13) of the adjustment shaft (3) and the follower (14) of the adjustment element (4) are captured or caught between the legs (11, 12) of the leg spring (10) and
d) when the adjustment element (4) is rotated relative to the adjustment shaft (3) in a first rotational direction (16) a first leg (11) of the leg spring (10) is supported on the follower (13) of the adjustment shaft (3) whereas a second leg (12) of the leg spring (10) is supported on the follower (14) of the adjustment element (4) and
e) when the adjustment element (4) is rotated relative to the adjustment shaft (3) in a second rotational direction (17) the first leg (11) of the leg spring (10) is supported on the follower (14) of the adjustment element (4) whereas the second leg (12) of the leg spring (10) is supported on the follower (13) of the adjustment shaft (3).

4. Brake pressure valve (1) of claim 3, **characterised in that** the leg spring (10) is supported on the adjustment shaft (3) and/or guided by the adjustment shaft (3).

5. Brake pressure valve (1) of one of the preceding claims, **characterised in that** the adjustment element (4) is an adjustment lever (5) which extends transverse to a rotational axis (8) of the adjustment shaft (3), a first end portion of the adjustment lever (5) being connected by the connection (6) to the adjustment shaft (3) and a second end portion of the adjustment lever (5) being supported via the fixing device (18) on the valve housing (2) or on the console.

6. Brake pressure valve (1) of claim 5, **characterised in that**
a) the fixing device (18) comprises
aa) a circumferential segment (19) formed by the adjustment lever (5), the circumferential segment (19) comprising at least two recesses (24) and
ab) a fixing element (22) which is guided for being displaced on the valve housing (2) or on the console with a displacement degree of freedom (27) parallel to the rotational axis (8) of the adjustment shaft (3) and
b) the adjustment lever (5) can be fixed in different adjustment positions by arranging the fixing element (22) in one of the recesses (24) which are associated with the respective adjustment positions.

7. Brake pressure valve (1) of claim 6, **characterised in that** a fixing rod (20) is provided which is fixed to the valve housing (2) and on which the fixing element (22) is guiding for being displaced.

8. Brake pressure valve (1) of claim 7, **characterised in that** a spring is effective between the fixing road (20) and the fixing element (22), the spring biasing the fixing element (22) towards its fixing position.

9. Brake pressure valve (1) of one of the preceding claims, **characterised in that** the valve housing (2) comprises a chassis mounting region by which it is possible to fix the valve housing (2) at a chassis of a vehicle trailer, the fixing device (18) being directly mounted to the valve housing (2) and the fixing device (18) together with the valve housing (2) being supported by the chassis mounting region on the chassis.

## Revendications

1. Soupape de pression de freinage en fonction de la charge (1) avec
a) un boîtier de soupape (2) avec un raccord d'entrée pour une pression de freinage d'entrée et un raccord de sortie pour une pression de freinage de sortie,
b) des éléments de soupape, qui convertissent la pression de freinage d'entrée selon une caractéristique de conversion, dans la pression de freinage de sortie,
c) un arbre de réglage (3) dépassant du boîtier de soupape (2), qui est couplé avec les éléments de soupape de façon à ce qu'une rotation de l'arbre de réglage (3) par rapport au boîtier de soupape (2) ait pour conséquence une modification de la caractéristique de conversion et
d) un élément de réglage (4) qui est disposé à l'extérieur du boîtier de soupape (2) et
da) est relié avec l'arbre de réglage (3) avec une liaison (6) transmettent un couple,
db) peut être fixé dans différentes positions de réglage au moyen d'un dispositif de fixation (18) au boîtier de soupape (2) ou à une console, qui est reliée fermement au boîtier de soupape (2),
e) dans lequel l'arbre de réglage (3) est appuyé, par l'intermédiaire d'un chemin d'appui (26), que parcourent l'élément de réglage (4) et le dispositif de fixation (18) sur la liaison (6), par l'intermédiaire de laquelle l'élément de réglage (4) est relié avec l'arbre de réglage (3), contre le boîtier de soupape (2) ou la console,
**caractérisée en ce que**
f) le chemin d'appui (26)
fa) présente un degré de liberté et
fb) comprend au moins un ressort (9) qui, lors d'une déviation relative le long du degré de liberté par rapport à une position d'équilibre (15), génère une force de rappel ou un couple de rappel en direction de la position d'équilibre (15).

2. Soupape de pression de freinage (1) selon la revendication 1, **caractérisée en ce que** la liaison (6), par l'intermédiaire de laquelle l'élément de réglage (4) est relié avec l'arbre de réglage (3) et qui transmet le couple, présente le degré de liberté sous la forme d'un degré de liberté en rotation (7) et le ressort est un ressort qui est appuyée, avec au moins un pied de ressort, contre l'élément de réglage (4) et qui est appuyé, avec au moins un pied de ressort, contre l'arbre de réglage (3) et qui, lors d'une déviation relative sous la forme d'une déviation d'angle de rotation relative entre l'élément de réglage (4) et l'arbre de réglage (3) hors de la position d'équilibre (15), génère une force de rappel en direction de la position d'équilibre (15).

3. Soupape de pression de freinage (1) selon la revendication 2, **caractérisée en ce que**
a) le ressort est un ressort à branches (10), dans lequel les deux pieds de ressorts sont conçus comme des branches (11, 12),
b) à l'élément de réglage (4) et à l'arbre de réglage (3) correspond respectivement un élément d'entraînement (13, 14) et
c) l'élément d'entraînement (13) de l'arbre de réglage (3) et l'élément d'entraînement (14) de l'élément de réglage (4) sont piégés entre les branches (11, 12) du ressort à branches (10) et
d) lors d'une rotation de l'élément de réglage (4) par rapport à l'arbre de réglage (3) vers une première direction de rotation (16), une première branche (11) du ressort à branches (10) est appuyée contre l'élément d'entraînement (13) de l'arbre de réglage (3), tandis qu'une deuxième branche (12) du ressort à branches (10) est appuyée contre l'élément d'entraînement (14) de l'élément de réglage (4) et
e) lors d'une rotation de l'élément de réglage (4) par rapport à l'arbre de réglage (3) vers une deuxième direction de rotation (17), la première branche (11) du ressort à branches (10) est appuyée contre l'élément d'entraînement (14) de l'élément de réglage (4), tandis que la deuxième branche (12) du ressort à branches (10) est appuyée contre l'élément d'entraînement (13) de l'arbre de réglage (3).

4. Soupape de pression de freinage (1) selon la revendication 3, **caractérisée en ce que** le ressort à branches (10) est appuyé et/ou guidé sur l'arbre de réglage (3).

5. Soupape de pression de freinage (1) selon l'une des revendications précédentes, **caractérisée en ce que** l'élément de réglage (4) est un levier de réglage (5) qui s'étend transversalement par rapport à un axe de rotation (8) de l'arbre de réglage (3), dans lequel une première partie d'extrémité du levier de réglage (5) est reliée, par l'intermédiaire de la liaison (6), avec l'arbre de réglage (3) et une deuxième partie d'extrémité du levier de réglage (5) est appuyée, par l'intermédiaire du dispositif de fixation (18), contre le boîtier de soupape (2) ou la console.

6. Soupape de pression de freinage (1) selon la revendication 5, **caractérisée en ce que**
a) le dispositif de fixation (18)
aa) comprend un segment périphérique (19) formé par le levier de réglage (5), avec au moins deux évidements (24) et
ab) un élément de fixation (22), qui est guidé de manière coulissante au niveau du boîtier de soupape (2) ou de la console avec un degré de liberté de coulissement (27) parallèle à l'axe de rotation (8) de l'arbre de réglage (3) et
b) le levier de réglage (5) peut être fixé dans différentes positions de réglage, l'élément de fixation (22) étant disposé dans un des évidements (24) qui correspondent aux positions de réglage respectives.

7. Soupape de pression de freinage (1) selon la revendication 6, **caractérisée en ce qu'**une entretoise de fixation (20) est présente, qui est fixé au boîtier de soupape (2) et au niveau de laquelle l'élément de fixation (22) est guidé de manière coulissante.

8. Soupape de pression de freinage (1) selon la revendication 7, **caractérisée en ce que**, entre l'entretoise de fixation (20) et l'élément de fixation (22), un ressort agit, qui contraint l'élément de fixation (22) en direction de sa position de fixation.

9. Soupape de pression de freinage (1) selon l'une des revendications précédentes, **caractérisée en ce que** le boîtier de soupape (2) comprend une partie de fixation de châssis par l'intermédiaire de laquelle le boîtier de soupape (2) peut être fixé à un châssis d'une remorque de véhicule, dans lequel le dispositif de fixation (18) est fixé directement au boîtier de soupape (2) et le dispositif de fixation est appuyé, conjointement avec le boîtier de soupape (2), par l'intermédiaire de la partie de fixation de châssis, contre le châssis.
